# EUROPÄISCHE PATENTSCHRIFT

(11) **EP 3 659 032 B1**
(45) Veröffentlichungstag und Bekanntmachung des Hinweises auf die Patenterteilung: **11.05.2022**
(21) Anmeldenummer: 18737237.0
(22) Anmeldetag: 02.07.2018
(51) Int. Cl.: G06F 9/4401, G06F 11/22

(54) **VERFAHREN ZUM BETREIBEN EINES STEUERGERÄTES UND VORRICHTUNG MIT ZUGEHÖRIGEM STEUERGERÄT**
METHOD FOR OPERATING A CONTROL UNIT, AND DEVICE HAVING AN ASSOCIATED CONTROL UNIT
PROCÉDÉ DE FONCTIONNEMENT D'UN APPAREIL DE COMMANDE ET DISPOSITIF DOTÉ DE L'APPAREIL DE COMMANDE CORRESPONDANT

(30) Priorität: 27.07.2017 DE 102017212918
(43) Veröffentlichungstag der Anmeldung: 03.06.2020
(73) Patentinhaber: Robert Bosch GmbH, 70442 Stuttgart (DE)
(72) Erfinder: KUTTENBERGER, Alfred, 71263 Weil Der Stadt (DE)
(86) Internationale Anmeldenummer: PCT/EP2018/067801
(87) Internationale Veröffentlichungsnummer: WO 2019/020322

(56) Entgegenhaltungen:
- EP-A1- 1 870 727
- EP-A2- 3 073 456
- JP-A- S61 198 337
- US-A1- 2012 239 918
- US-A1- 2015 304 648
- Anonymous: "Siemens PC-D - MCbx", , 31. Dezember 1986 (1986-12-31), XP055512669, Gefunden im Internet: URL:http://oldcomputer.info/pc/SiemensPCD/ index.htm [gefunden am 2018-10-05]

## Beschreibung

### Stand der Technik

Die vorliegende Erfindung betrifft ein Verfahren zum Betreiben eines Steuergerätes sowie eine Vorrichtung mit einem zugehörigen Steuergerät.

Bei Steuergeräten, auf welche sicherheitsrelevante Funktionen implementiert sind, werden bei einem Hochlaufen des Steuergerätes bestimmte Tests durchgeführt, um zu prüfen, ob die Komponenten des Steuergerätes korrekt funktionieren. Dies wird als Selbsttest bezeichnet. Ein solcher Selbsttest ist besonders wichtig, wenn es sich bei dem Steuergerät um ein Steuergerät mit Sicherheitsfunktionen mit entsprechender ASIL-Einstufung handelt. So offenbaren die DE4409563A1 und die EP0811920A2 Steuergeräte, welche dazu in der Lage sind einen Selbsttest auszuführen. Die DE102006036597A1 offenbart zudem eine elektronische Vorrichtung mit einer Option zum Ausführen eines schnellen Boot-Prozesses. Ferner offenbart die US2012/239918A1 ein Computer-Bootsystem durch welches unterschiedliche Boot-Modi ausgeführt werden können. Die EP3073456A2 offenbart ein Verfahren zur Unterstützung eines Fahrers eines Fahrzeugs, wobei eine Objekt-Erfassungseinrichtung vorgesehen ist, mittels der außerhalb des Fahrzeugs in einem definierten Nahbereich des Fahrzeugs befindliche Objekte selbsttätig erkennbar und/oder erfassbar sind. Die JPS61198337A offenbart eine Vorrichtung in der ein Selbsttest übersprungen werden kann. Die US2015/304648A1 offenbart einen Selbsttest für ein Bilderfassungs-Subsystem. Die EP1870727A1 offenbart ein Fahrerassistenzsystem mit einer Selbsttestvorrichtung. Oftmals ist es jedoch erforderlich, dass ein Steuergerät schnell verfügbar ist. Eine solche Verfügbarkeit des Steuergerätes wird jedoch oftmals durch den Selbsttest verzögert.

### Offenbarung der Erfindung

Das erfindungsgemäße Verfahren zum Betreiben eines Steuergerätes wird durch die Merkmale des unabhängigen Anspruchs 1 beschrieben.

Die erfindungsgemäße Vorrichtung umfasst ein wie im unabhängigen Anspruch 10 beschriebes Steuergerät.

Dadurch wird ermöglicht, dass das Steuergerät entweder in einen Betriebszustand versetzt wird, in welchem dieses für sicherheitsrelevante Funktionen nutzbar ist, also in den ersten Modus, oder in einen Betriebszustand versetzt wird, in dem dieses zwar schnell verfügbar ist, jedoch nicht für sicherheitsrelevante Funktionen geeignet ist, also in den zweiten Modus. Dabei ist das Steuergerät insbesondere dazu eingerichtet, einen Indikator bereitzustellen, welcher erkenntlich macht, ob das Steuergerät sich in dem ersten Modus oder in dem zweiten Modus befindet. Durch eine entsprechende Wahl der ersten Startsequenz oder der zweiten Startsequenz kann somit ausgewählt werden, für welche Funktionen das Steuergerät nutzbar sein soll.

Ein Steuergerät ist eine Elektronik, welche es ermöglicht, elektrische Komponenten zu betreiben. Zu den elektrischen Komponenten gehören insbesondere solche Elemente, welche zum Beeinflussen eines Betriebszustandes eines Fahrzeuges geeignet sind, als auch solche Komponenten, welche zum Erfassen bestimmter Parameter geeignet sind, insbesondere Sensoren.

Wird das Steuergerät hochgefahren, so bedeutet dies, dass das Steuergerät in einen betriebsbereiten Zustand versetzt wird. Das bedeutet, dass sich das Steuergerät zunächst in einem Zustand befindet, in welchem dieses entweder ausgeschaltet oder in einem sog. Stand-by-Modus oder Schlafmodus befindlich ist. Der Übergang zwischen diesem Zustand und dem betriebsbereiten Zustand wird als ein Hochfahren des Steuergerätes bezeichnet. Eine Startsequenz ist eine Sequenz aus einem oder mehreren Schritten, die während des Hochfahrens des Steuergerätes von dem Steuergerät ausgeführt wird. Die erste Startsequenz umfasst gegenüber der zweiten Startsequenz einen zusätzlichen Selbsttest. Das bedeutet mit anderen Worten, dass während der ersten Sequenz ein Selbsttest ausgeführt wird, welcher während der zweiten Startsequenz nicht ausgeführt wird. Unter einem Selbsttest ist eine Validierung von korrekten Betriebsparametern zu verstehen. Bei dem Selbsttest wird eine Funktionsfähigkeit des Steuergerätes und/oder der an das Steuergerät angeschlossenen elektrischen Komponenten geprüft.

Die Unteransprüche zeigen bevorzugte Weiterbildungen der Erfindung.

Gemäß der Erfindung werden durch das Steuergerät Informationen für ein erstes System bereitgestellt, wobei die Informationen nur dann für das erste System bereitgestellt werden oder von dem ersten System genutzt werden, wenn das Steuergerät sich in dem ersten Modus befindet. Das bedeutet mit anderen Worten, dass die Informationen dem ersten System nicht bereitgestellt werden oder von dem ersten System nicht genutzt werden, wenn das Steuergerät sich in dem zweiten Modus befindet. Somit werden durch das erste System die von dem Steuergerät bereitgestellten Informationen nur dann genutzt, wenn durch das Steuergerät der Selbsttest durchgeführt wurde. Das erste System ist insbesondere ein sicherheitsrelevantes System. Somit kann sichergestellt werden, dass dem ersten System nur solche Daten bereitgestellt werden, welche durch ein vollständig funktionsfähiges Steuergerät erzeugt wurden. So kann die Information beispielsweise ein Signal eines Sensors sein, welcher an das erste Steuergerät gekoppelt ist. Die Messwerte dieses Sensors werden durch das erste System nur dann genutzt, wenn das Steuergerät in dem ersten Modus ist. So werden die Informationen dem ersten System insbesondere nicht übermittelt, als nicht verwertbar markiert oder es wird dem Steuergerät ein Indikator bereitgestellt, welcher dem ersten System erkenntlich macht, dass die Informationen nicht zu nutzen sind. Alternativ oder zusätzlich stellt das Steuergerät eine Funktion für das erste System bereit, wobei die Funktion nur dann für das erste System bereitgestellt wird oder von dem ersten System genutzt wird, wenn das Steuergerät sich in dem ersten Modus befindet. Eine Funktion ist dabei eine Aktion, welche durch das erste System ausgelöst wird. So ist eine Funktion beispielsweise ein Betätigen eines Signalmittels, welche über das Steuergerät angesteuert wird.

Insbesondere ist das erste System ein für einen Fahrbetrieb eines Fahrzeuges relevantes System. So ist das erste System insbesondere ein Fahrerassistenzsystem. Somit ist das erste System ein sicherheitsrelevantes System. Ist eine Funktionsfähigkeit des Steuergerätes nicht sichergestellt, da der Selbsttest nicht ausgeführt wurde, kann es bei einem Fahrbetrieb des Fahrzeuges zu Unfällen kommen. Daher ist es vorteilhaft, dass solche Systeme, welche für den Fahrbetrieb des Fahrzeuges relevant sind, nur dann auf das Steuergerät zugreifen, wenn dessen Funktionsfähigkeit und Sicherheit sichergestellt ist.

Gemäß der Erfindung stellt das Steuergerät Informationen bereit, wobei die Informationen für das zweite System bereitgestellt werden, wenn das Steuergerät sich in dem ersten und in dem zweiten Modus befindet. Alternativ oder zusätzlich wird durch das Steuergerät eine Funktion für das zweite System bereitgestellt, wobei die Funktion für das zweite System bereitgestellt wird, wenn das Steuergerät sich in dem ersten oder dem zweiten Modus befindet. Dies bedeutet mit anderen Worten, dass Informationen und/oder Funktionen, welche von dem Steuergerät bereitgestellt werden, von dem zweiten System zu jederzeit genutzt werden können, unabhängig davon, ob das Steuergerät sich in dem ersten Modus oder in dem zweiten Modus befindet. Somit wird es ermöglicht, dass das zweite System sehr schnell Zugriff auf Informationen oder Funktionen erlangen kann, welche durch das Steuergerät bereitgestellt werden. Dabei wird das Hochfahren des Steuergerätes insbesondere durch das zweite System angestoßen. Es wird somit eine Nutzung des Steuergerätes durch das zweite System auch dann ermöglicht, wenn nicht sichergestellt ist, dass das Steuergerät vollständig funktionsfähig ist.

Auch ist es vorteilhaft, wenn das zweite System ein Fahrzeugüberwachungssystem ist, welches dazu eingerichtet, einen Vorgang im Umfeld des Fahrzeuges zu protokollieren oder dazu eingerichtet, lediglich bei einem Stillstand des Fahrzeuges in Betrieb zu sein. Das Fahrzeugüberwachungssystem ist somit ein System, welches nicht sicherheitsrelevant ist, da lediglich Informationen aufgezeichnet werden oder ein Unfall schon dadurch ausgeschlossen ist, dass das Fahrzeug sich nicht bewegt, also im Stillstand ist.

Bevorzugt erfolgt das Ausführen der zweiten Startsequenz, um das Steuergerät in den zweiten Modus zu versetzen, in Reaktion darauf, dass von einer Sensoreinheit ein Auslösesignal bereitgestellt wird. Somit kann auf eine Interaktion mit einem Anwender verzichtet werden und das Steuergerät steht besonders schnell für eine Nutzung zur Verfügung. Die Sensoreinheit umfasst dabei insbesondere einen Sensor, welcher dazu geeignet ist, ein Ereignis im Umfeld eines Fahrzeuges zu erkennen. Insbesondere umfasst das zweite System die Sensoreinheit. Dabei ist es vorteilhaft, wenn sowohl das zweite System als auch die Steuereinheit von der Sensoreinheit aktiviert werden. Ein solches System kann besonders schnell auf einen Vorgang reagieren, welcher von der Sensoreinheit erkannt wird.

Ferner ist es vorteilhaft, wenn das Steuergerät eine Steuerelektronik für einen Sensor, insbesondere für ein Kamerasystem ist. Ist das Steuergerät eine Steuerelektronik für ein Kamerasystem, so können Bilder des Kamerasystems in dem ersten Modus bereitgestellt werden, wobei sichergestellt ist, dass die Bilder keine Fehler umfassen, oder in dem zweiten Modus bereitgestellt werden, wodurch sehr schnell Bilder bereitgestellt werden können. Es können somit durch das erste System und das zweite System solche Funktionen bereitgestellt werden, welche entweder schnell oder mit hoher Zuverlässigkeit auf ein Ereignis reagieren. So kann insbesondere vermieden werden, dass das zweite System zu spät auf ein Ereignis reagiert. Das Kamerasystem ist insbesondere ein sogenanntes NRC-System.

Ferner ist es vorteilhaft, wenn der zusätzliche Selbsttest nach einem Hochfahren des Steuergerätes, bei welchem die zweite Startsequenz ausgeführt wurde, in Reaktion auf eine Anforderung ausgeführt wird, um das Steuergerät in den ersten Modus zu versetzen. Dies bedeutet, dass das Steuergerät, nachdem dieses sich in dem zweiten Modus befindet, durch die Anforderung in den ersten Modus versetzt wird. Der Selbsttest wird somit nachgeholt. Dazu wird das Steuergerät insbesondere neu gestartet und die erste Startsequenz wird vollständig ausgeführt oder aber der Selbsttest wird eigenständig nachgeholt. Somit wird beispielsweise ermöglicht, dass das zweite System schnell auf ein Ereignis reagiert, im Folgenden aber auch ein sicherer Betrieb des ersten Systems ermöglicht ist.

Bevorzugt wird bei dem Hochfahren des Steuergerätes zunächst ein Schalter in eine erste Stellung gesetzt und der Schalter am Ende der ersten Startsequenz in eine zweite Stellung gesetzt, wobei der Schalter dazu eingerichtet ist, ein Ausführen einer sicherheitsrelevanten Funktion zu unterbinden, wenn dieser sich in der ersten Stellung befindet. Auf diese Weise wird verhindert, dass Informationen oder Funktionen, welche durch das Steuergerät bereitgestellt werden, bereits durch das erste System genutzt werden, bevor der Startvorgang des Steuergerätes, also das Hochfahren des Steuergerätes, beendet ist. Zudem wird ein allgemein nutzbarer Indikator bereitgestellt, durch welchen durch unterschiedlichste Geräte abgefragt werden kann, ob das Steuergerät dazu geeignet ist, sicherheitsrelevante Informationen oder Funktionen bereitzustellen. Der Schalter ist somit ein Indikator für den Modus, in welchem das Steuergerät sich befindet. Insbesondere ist der Schaltkreis mit dem Schalter als ein fehlersicherer Schaltkreis ausgeführt. Das bedeutet, dass der Schalter derart von dem Steuergerät angesteuert wird, dass dieser sich bei einem Fehler in dem Steuergerät oder in dem Schalter in der ersten Stellung befindet. Es wird darauf hingewiesen, dass der Schalter sich im Ruhezustand in der ersten Stellung befinden kann, was bedingt, dass das Setzen des Schalters in die erste Stellung keine physikalische Bewegung des Schalters bedingt.

Das Steuergerät ist bevorzugt ein Steuergerät, welches in einem Fahrzeug betrieben wird.

### Kurze Beschreibung der Zeichnungen

Nachfolgend werden Ausführungsbeispiele der Erfindung unter Bezugnahme auf die begleitende Zeichnung im Detail beschrieben. In der Zeichnung ist:
- Figur 1: eine Darstellung eines Fahrzeuges, welches eine erfindungsgemäße Vorrichtung mit einem Steuergerät gemäße einer beispielhaften Ausführungsform der Erfindung umfasst, und
- Figur 2: eine Darstellung eines beispielhaften Ablaufdiagramms des erfindungsgemäßen Verfahrens zum Betreiben eines Steuergerätes gemäß einer beispielhaften Ausführungsform der Erfindung.

### Ausführungsformen der Erfindung

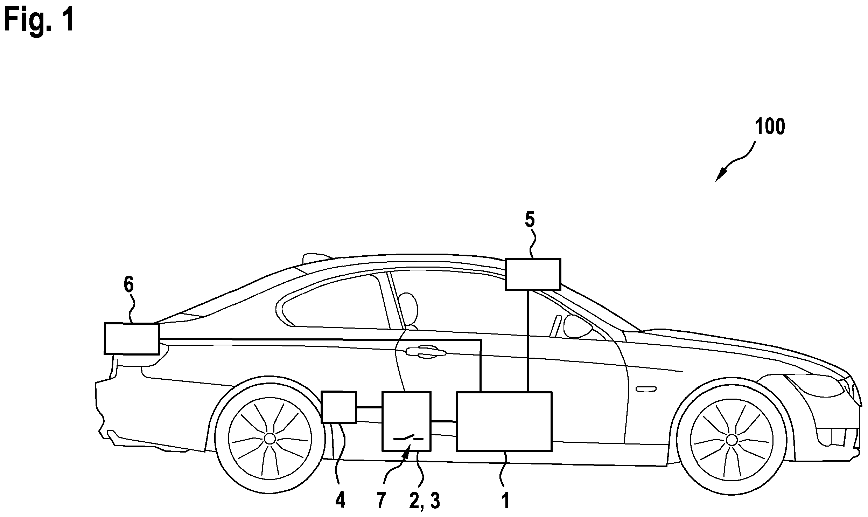

Figur 1 zeigt ein Fahrzeug 100. In dem Fahrzeug 100 ist ein Steuergerät 1 angeordnet, welches durch ein Hochfahren in einen betriebsbereiten Zustand versetzbar ist.

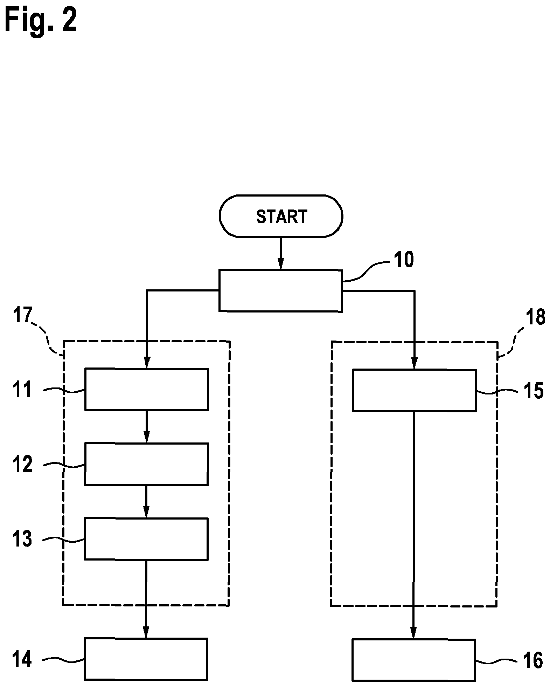

Das Steuergerät 1 ist ein elektronisches Steuergerät, welches eine Steuerelektronik eines Kamerasystems umfasst. Es ist daher in der hier beschriebenen beispielhaften Ausführungsform eine erste Kamera 5 und eine zweite Kamera 6 mit dem Steuergerät 1 gekoppelt. Durch die erste Kamera 5 und die zweite Kamera 6 wird ein Umfeld des Fahrzeuges 100 erfasst. Die erfassten Bilder der Kameras 5, 6 werden von den Kameras 5, 6 an das Steuergerät 1 übertragen und von diesem für eine weitere Verwendung durch andere Systeme 2, 3 des Fahrzeuges 100 bereitgestellt, wenn das Steuergerät 1 in einem betriebsbereiten Zustand ist. Durch das Steuergerät 1 wird das in Figur 2 dargestellte Verfahren zum Betreiben eines Steuergerätes 1 ausgeführt.

In dem Fahrzeug 100 sind weitere Systeme 2, 3 angeordnet, durch welche unterschiedliche Funktionen bereitgestellt werden. Dazu wird von diesen Systemen 2, 3 auf das Steuergerät 1 zugegriffen, um über dieses die Bilder der Kameras 5, 6 zu beziehen. Die Systeme 2, 3 unterscheiden sich in solche Systeme, welche sicherheitsrelevant sind und solche Systeme, welche keine sicherheitsrelevanten Funktionen bereitstellen.

So umfasst das Fahrzeug 100 in dieser beispielhaften Ausführungsform ein erstes System 2, welches ein Fahrassistenzsystem ist. Durch ein solches Fahrassistenzsystem kann beispielsweise ein teilautonomes oder autonomes Führen des Fahrzeuges 100 bereitgestellt werden. Ferner umfasst das Fahrzeug 100 ein zweites Systems 3, welches ein Beweissicherungssystem ist. Das zweite System 3 ist dabei dazu eingerichtet, einen Parkrempler zu erkennen und durch die Kameras 5, 6 erfasste Bilder zu speichern und für eine spätere Beweissicherung bereitzustellen. Es wird darauf hingewiesen, dass die genannten Systeme beispielhaft zu verstehen sind und auch durch andere Systeme ersetzt werden können oder weitere Systeme hinzugefügt werden können.

In dieser Ausführungsform ist das erste System 2 ein sicherheitsrelevantes System, da dieses zum einen genormte Sicherheitskriterien erfüllen muss und um anderen eine Gefährdung eines Benutzers des Fahrzeuges 100 gegeben wäre, sollte das erste System 2 nicht korrekt funktionieren. Das zweite System 3 ist kein sicherheitsrelevantes System, da dieses weder die für das erste System 2 gegebenen Normen zu erfüllen hat, noch kann es zu einer körperlichen Schädigung des Anwenders kommen, falls dieses System versagt. Ein weiteres Beispiel für ein sicherheitsrelevantes System ist beispielsweise eine Unfallfrüherkennung. Ein weiteres Beispiel für ein nicht sicherheitsrelevantes System ist beispielsweise eine Anwendererkennung, bei welcher ein Eigentümer des Fahrzeugs 100 bei einer Annäherung an das Fahrzeug 100 identifiziert wird.

Durch das zweite System 3 kann erfasst werden, ob das Fahrzeug 100 von einem Fremdfahrzeug berührt wurde, während das Fahrzeug 100 geparkt ist. So steht das Fahrzeug 100 beispielsweise in einer Parklücke, ohne dass ein Insasse in dem Fahrzeug 100 ist. Erfolgt in diesem Zustand eine Kollision mit dem Fremdfahrzeug, welche gemeinhin als Parkrempler bezeichnet wird, so sollen durch das zweite System 3 mittels der Kameras 5, 6 des Fahrzeuges 100 Bilder erfasst werden und zur Beweissicherung gespeichert werden. Eine solche Kollision wird beispielsweise mittels einer Sensoreinheit 4 erkannt, welche beispielsweise einen Beschleunigungssensor umfasst. Dabei befindet sich das Steuergerät 1 und die zugehörigen Kameras 5, 6 in einem Stand-by-Modus oder Schlafmodus mit sehr geringer Stromaufnahme und es werden nur die Kollisionserkennungssensoren, also die Sensoreinheit 4, von dem zweiten System 3 überwacht.

Wird die Kollision erkannt, so muss das Steuergerät 1 und die zugehörigen Kameras 5, 6 möglichst schnell hochgefahren werden, um die Kollisionsszene zur Beweissicherung aufzeichnen und abspeichern zu können. Normalerweise werden bei einem normalen Hochfahren des Steuergerätes 1 und der zugehörigen Kameras 5, 6 bestimmte Routinen und Tests durchgeführt, die eine bestimmte Zeit benötigen. Es besteht daher grundsätzlich die Möglichkeit, dass sich während dieses Hochfahrens, die Situation im Umfeld des Fahrzeuges 100 derart verändert, dass eine eindeutige Beweisführung nicht mehr möglich ist, da das Hochfahren zu viel Zeit benötigt.

Daher ist das Steuergerät 1 dazu eingerichtet, bei dem Hochfahren wahlweise eine erste Startsequenz 17 auszuführen, um das Steuergerät 1 in einen ersten Modus zu versetzen, oder eine zweite Startsequenz 18 auszuführen, um das Startgerät 1 in einen zweiten Modus zu versetzen. Dazu wird von dem Steuergerät 1 das erfindungsgemäße Verfahren ausgeführt. Dieses ist in einer beispielhaften Ausführungsform in Figur 2 gezeigt.

Das Verfahren wird in einem Zustand gestartet, in dem das Steuergerät 1 sich in dem Schlafmodus befindet. In einem ersten Verfahrensschritt 10 wird erkannt, ob ein Hochfahren des Steuergerätes 1 erforderlich ist und es erfolgt ein Auswählen, ob die erste Startsequenz 17 oder die zweite Startsequenz 18 ausgeführt wird. Das Steuergerät 1 ist dazu mit dem ersten System 2 und dem zweiten System 3 gekoppelt. Das Steuergerät 1 wird dann hochgefahren, wenn von dem ersten System 2 oder von dem zweiten System 3 Bilder von den Kameras 5, 6 benötigt werden. So wird ein Hochfahren des Steuergerätes 1 insbesondere durch eine Anfrage gestartet, welche von dem ersten System 2 oder dem zweiten System 3 an das Steuergerät 1 übermittelt wird. Werden die Kamerabilder der Kameras 5, 6 von dem ersten System 2 benötigt, so wird die erste Startsequenz 17 ausgeführt und das Steuergerät 1 in den ersten Modus versetzt. Werden die Kamerabilder der Kameras 5, 6 von dem zweiten System 3 benötigt, beispielsweise, weil die Beschleunigungssensoren des Fahrzeuges 100 eine Kollision erkannt haben, so wird die zweite Startsequenz 18 ausgeführt und das Steuergerät 1 in den zweiten Modus versetzt.

In dem ersten Verfahrensschritt 10 wird zudem ein Schalter 7 in eine erste Stellung gesetzt. Der erste Schalter 7 ist in dieser Ausführungsform ein Relais oder Transistor. Von dem Steuergerät 1 wird eine Steuerspannung bereitgestellt, um den Schalter 7 in die erste Stellung oder eine zweite Stellung zu setzen, d.h., um den Schalter 7 zu öffnen und zu schließen. Liegt keine Steuerspannung an dem Schalter 7 an, so befindet sich dieser in der ersten Stellung. Das erste System 2 ist mit dem Schalter 7 gekoppelt und führt seine sicherheitsrelevanten Funktionen nur dann aus, wenn der Schalter 7 sich in der zweiten Stellung befindet. Befindet sich der Schalter 7 in der ersten Stellung, in welche dieser in dem ersten Verfahrensschritt 10 gesetzt wurde, so wird ein Ausführen der sicherheitsrelevanten Funktion durch das erste System 2 unterbunden.

Wurde das Hochfahren des Steuergerätes 1 von dem ersten System 2 angefordert, so wird ein zweiter Verfahrensschritt 11 ausgeführt. Wurde das Hochfahren des Steuergerätes 1 von dem zweiten System 2 angefordert, so wird ein sechster Verfahrensschritt 15 ausgeführt.

Es wird zunächst eine Situation betrachtet, in der das Hochfahren des Steuergerätes 1 von dem ersten System 2 angefordert wurde und somit der zweite Verfahrensschritt 11 ausgeführt wird.

In dem zweiten Verfahrensschritt 11 werden die erste Kamera 5 und die zweite Kamera 6 mit einer Versorgungsspannung versorgt und somit initialisiert. Gleichzeitig wird eine Software des Steuergerätes 1 gestartet. Im Anschluss wird ein dritter Verfahrensschritt 12 ausgeführt.

In dem dritten Verfahrensschritt 12 erfolgt ein Selbsttest des Steuergerätes 1. Dazu werden von den Kameras 5, 6 Bilder abgefragt und diese dahingehend ausgewertet, ob die Bilder der Kameras 5, 6 fehlerfrei sind. So kann beispielsweise eine fehlerhafte Verbindung zu einer der Kameras 5, 6 erkannt werden.

Ist der Selbsttest und somit der dritte Verfahrensschritt 12 erfolgreich abgeschlossen, also wurde kein Fehler erkannt, so wird ein vierter Verfahrensschritt 13 ausgeführt. In dem vierten Verfahrensschritt 13 erfolgt ein Schalten des Schalters 7 in die zweite Stellung. Somit wird dem ersten System 2 signalisiert, dass das Steuergerät 1 betriebsbereit und in dem ersten Modus ist. Es wurde somit die erste Startsequenz 17 erfolgreich durchlaufen, wobei die erste Startsequenz 17 in dieser Ausführungsform den zweiten Verfahrensschritt 11, den dritten Verfahrensschritt 12 und den vierten Verfahrensschritt 13 umfasst.

In einem auf den vierten Verfahrensschritt 13 folgenden fünften Verfahrensschritt 14 wird das Steuergerät 1 nunmehr in dem ersten Modus betrieben, bis das Steuergerät 1 abgeschaltet oder in den Schlafmodus zurückversetzt wird.

Erfolgt die Anforderung zum Hochfahren des Steuergeräts 1 in dem ersten Verfahrensschritt 10 durch das zweite System 3, so wird die zweite Startsequenz 18 ausgeführt. Das zweite System 3 umfasst in dieser Ausführungsform die Sensoreinheit 4, durch welche ein Auslösesignal bereitgestellt wird. Die Sensoreinheit 4 ist dabei der Kollisionserkennungssensor, welcher beispielhaft als Beschleunigungssensor ausgeführt ist. Von diesem wird das Auslösesignal bereitgestellt, wenn eine Beschleunigung oberhalb eines vorgegebenen Schwellenwerts erkannt wird. Das Ausführen der zweiten Startsequenz 18, um das Steuergerät 1 in den zweiten Modus zu versetzen, erfolgt somit in Reaktion darauf, dass von der Sensoreinheit 4 ein Auslösesignal bereitgestellt wird.

In der zweiten Startsequenz 18 erfolgt zunächst ein Ausführen eines sechsten Verfahrensschrittes 15. Dieser entspricht im Wesentlichen dem zweiten Verfahrensschritt 11. Es werden somit das Steuergerät 1 und die angeschlossenen Kameras 5, 6 initialisiert.

In einem auf den sechsten Verfahrensschritt 15 folgenden siebten Verfahrensschritt 16 wird das Steuergerät 1 nunmehr in dem zweiten Modus betrieben, bis das Steuergerät 1 abgeschaltet oder in den Schlafmodus zurückversetzt wird.

Alternativ kann das Steuergerät 1 auch von dem zweiten Modus in den ersten Modus versetzt werden, indem der dritte Verfahrensschritt 12 ausgeführt wird. Dies ist in Figur 2 durch einen gestrichelten Pfeil angedeutet. Ein solcher Übergang von dem zweiten Modus in den ersten Modus erfolgt insbesondere in Reaktion auf eine Anforderung, welche beispielsweise eine Anforderung eines Bildes der Kameras 5,6 durch das erste System 2 ist. Alternativ kann das Verfahren auch auf den ersten Verfahrensschritt 10 verzweigen, um das Steuergerät 1 durch ein vollständiges Ausführen der ersten Startsequenz 17 in den ersten Modus zu versetzen.

Es wird darauf hingewiesen, dass nach dem Ausführen der zweiten Startsequenz 18 der Schalter 7 nicht in die zweite Stellung gesetzt wurde. Dieser befindet sich somit weiterhin in der ersten Stellung. Auf diese Weise wird dem ersten System 2 signalisiert, dass die über das Steuergerät 1 bereitgestellten Kamerabilder der Kamers 5, 6 nicht für eine Nutzung durch das erste System 2 geeignet sind. Es ergibt sich somit, dass der Schalter 7 sich in der ersten Stellung befindet, wenn das Steuergerät 1 in den zweiten Modus versetzt ist. Ferner ergibt sich, dass der Schalter 7 sich in der zweiten Stellung befindet, wenn das Steuergerät 1 in den ersten Modus versetzt ist.

Die über das Steuergerät 1 bereitgestellten Bilder der Kameras 5, 6 können somit nur dann durch das erste System 2 genutzt werden, wenn das Steuergerät 1 sich in dem ersten Modus befindet, da das erste System 2 nur dann auf diese Kamerabilder zurückgreift, wenn der Schalter 7 in der entsprechenden Stellung ist. Durch das zweite System 3 wird nicht berücksichtigt, in welcher Stellung sich der Schalter 7 befindet. Das bedeutet, dass durch das zweite System 3 die Bilder, welche über das Steuergerät 1 bereitgestellt werden, immer dann genutzt werden können, wenn das Steuergerät 1 hochgefahren ist. Das bedeutet, dass das zweite System 3 die von dem Steuergerät 1 bereitgestellten Informationen, also die Kamerabilder, unabhängig davon nutzt, ob das Steuergerät 1 sich in dem ersten Modus oder in dem zweiten Modus befindet.

Wurde das Hochfahren des Steuergerätes 1 durch das zweite System 3 ausgelöst und somit die zweite Startsequenz 18 ausgeführt, wird somit eine verkürzte Startsequenz ausgeführt, da der Selbsttest in dem dritten Verfahrensschritt 12 nicht ausgeführt wird. Dies bedeutet mit anderen Worten, dass die erste Startsequenz 17 gegenüber der zweiten Startsequenz 18 einen zusätzlichen Selbsttest 12 umfasst. Es wird darauf hingewiesen, dass die zweite Startsequenz 18 in alternativen Ausführungsformen einen verkürzten Selbsttest umfassen kann, welcher weniger Schritte umfasst, als der in der ersten Startsequenz 17 ausgeführten Sequenz.

Insbesondere in dem beschriebenen Fall, in dem das erste System 2 ein Fahrassistenzsystem ist und das zweite System 3 ein System zur Beweissicherung ist, ist es eine Aufgabe der Erfindung in speziellen Fällen eine andere Bootsequenz auszuführen, welche deutlich schneller ist, so dass eine Szene im Umfeld des Fahrzeuges derart aufgezeichnet werden kann, dass sie als Beweis brauchbar ist. In diesem Fall ist es nun so, dass einen Verkürzung der Bootzeit durch ein Überspringen und Weglassen von Testfällen, wie z.B. Speichertest, Abschaltpfadtest etc. erreicht wird. Das ist möglich, da sich das Fahrzeug 100 in einer Parksituation befindet und somit keine Gefahr vom Fahrzeug 100 ausgeht. Es ist nun mit Hilfe dieser Funktion sicherzustellen, dass in einem derartigen Fall nur die zulässigen Funktionen und keine sicherheitsrelevanten Funktionen ausgeführt werden. Dies kann z. B. dadurch gewährleistest werden, dass ein Sicherheit-µC / ASIC dies überwacht und das Steuergerät 1 und/oder die Kameras 5,6 nach einer bestimmten Zeit wieder ausschaltet, oder sollte dies durch den Fahrer angefordert werden in den normale Bootprozess zurücksetzt, so dass dann die Tests und Sicherheitsüberprüfungen durchgeführt werden. Erst nachdem dies erfolgt ist können z. B. Sicherheitsfunktionen aktiviert werden. Eine weitere Methode ist, dass bei jedem Hochfahren der Steuergerätes und der Kameras 5,6 zu Beginn des Hochlaufs der Schalter 7 gesetzt wird, der verhindert, dass sicherheitsrelevante Funktionen aktiviert werden, da der Schalter als Eintrittsbedingung für die Sicherheitsfunktionen gilt. Im Weiteren Verlauf eines normalen Hochfahrens wird dieser Schalter 7 dann nach dem erfolgreichen Durchführen aller Sicherheitstests derart gesetzt, dass die Sicherheitsfunktionen aktiviert werden können. Für den Fall, dass die Kollisionserkennung durch ein anderes Steuergerät durchgeführt wird, wird das Kamerasystem durch eine spezielle Botschaft aufgeweckt und läuft dann wie oben beschrieben in einem abgesicherten Modus hoch.

In der beschriebenen Ausführungsform werden Bilder der Kameras 5,6 von dem Steuergerät 1 als Information für das erste System 2 und für das zweite System 3 bereitgestellt. In alternative Ausführungsformen werden durch das Steuergerät 1 Funktionen für das erste System 2 und das zweite System 3 bereitgestellt. So ist das Steuergerät 1 in alternativen Ausführungsformen der Erfindung beispielsweise ein Steuergerät eines Signalgebers. So werden über das Steuergerät 1 beispielsweise unterschiedliche Beleuchtungsbereiche der Scheinwerfer des Fahrzeuges 100 angesteuert. Diese Funktion kann beispielsweise für eine unmittelbare Beleuchtung der umgebenden Szenerie des Fahrzeuges 1 für das zweite System 3 in dem zweiten Modus sofort bereitgestellt werden. Werden die Beleuchtungsbereiche durch das Steuergerät 1 jedoch für ein Kurvenlicht bei einem Betrieb des Fahrzeuges benötigt und somit durch ein sicherheitsrelevantes System angefordert, beispielsweise durch das erste System 2, so erfolgt dies nur, wenn sich das Steuergerät 1 in dem ersten Modus befindet.

Ferner ist der Schalter 7 zwar eine bevorzugte Technik, um zu signalisieren, ob das Steuergerät 1 sich in dem ersten Modus oder in dem zweiten Modus befindet, jedoch erfolgt in anderen vorteilhaften Ausführungsformen der Erfindung eine unterschiedliche Signalisierung. So ist das Steuergerät 1 beispielsweise über einen digitalen Bus mit dem ersten System 2 und dem zweiten System 3 verbunden. Um zu signalisieren, ob das Steuergerät 1 sich in dem ersten Modus oder in dem zweiten Modus befindet, kann den von dem Steuergerät 1 bereitgestellten Bildern ein Datenpaket zugeordnet sein, welches beschreibt, in welchem Zustand sich das Steuergerät 1 befindet. Durch eine entsprechende Auswertung des Datenpaketes durch das erste System 2 und das zweite System 3 kann erkannt werden, ob die Informationen oder Funktionen das Steuergeräates1 durch das jeweilige System 2, 3 genutzt werden dürfen. Alternativ ist es vorteilhaft, wenn das erste System 2 und das zweite System 3 durch unterschiedliche Signalleitungen mit dem Steuergerät 1 gekoppelt sind. In diesem Fall wird ein Ausgang, an welchem die zu dem ersten System 2 führende Signalleitung angeschlossen ist, nur dann freigeschaltet, wenn das Steuergerät 1 sich in dem ersten Modus befindet.

Es wird ferner darauf hingewiesen, dass das erste System 2 und das zweite System 3 nicht zwingend eine getrennte Hardware bedingen, sondern auch auf einer gemeinsamen Hardware, beispielsweise in Form von unterschiedlichen ausgeführten Applikationen, ausgeführt sein können.

## Patentansprüche

1. Verfahren zum Betreiben eines Steuergerätes (1), welches mit einem ersten System (2) und einem zweiten System (3) gekoppelt ist, umfassend:
- ein Hochfahren des Steuergerätes (1), um dieses in einen betriebsbereiten Zustand zu versetzen, wobei bei dem Hochfahren des Steuergerätes (1) wahlweise
• eine erste Startsequenz (17) ausgeführt wird, um das Steuergerät (1) in einen ersten Modus zu versetzen, oder
• eine zweite Startsequenz (18) ausgeführt wird, um das Steuergerät (1) in einen zweiten Modus zu versetzen,
- wobei die erste Startsequenz (17) gegenüber der zweiten Startsequenz (18) einen zusätzlichen Selbsttest (12) umfasst, **dadurch gekennzeichnet, dass**
- das Steuergerät (1) Informationen für das erste System (2) bereitstellt, wobei die Informationen nur dann für das erste System (2) bereitgestellt werden oder von dem ersten System (2) genutzt werden, wenn das Steuergerät (1) sich in dem ersten Modus befindet, und
- das Steuergerät (1) Informationen für das zweite System (3) bereitstellt, wobei die Informationen für das zweite System (3) bereitgestellt werden, wenn das Steuergerät (1) sich in dem ersten oder dem zweiten Modus befindet.

2. Verfahren gemäß Anspruch 1, **dadurch gekennzeichnet, dass** das erste System (2) ein für einen Fahrbetrieb eines Fahrzeuges (100) relevantes System ist.

3. Verfahren gemäß einem der voranstehenden Ansprüche, **dadurch gekennzeichnet, dass**, das Steuergerät (1) eine Funktion für das erste System (2) bereitstellt, wobei die Funktion nur dann für das erste System (2) bereitgestellt wird oder von dem ersten System (2) genutzt wird, wenn das Steuergerät (1) sich in dem ersten Modus befindet.

4. Verfahren gemäß einem der voranstehenden Ansprüche, **dadurch gekennzeichnet, dass** das das Steuergerät (1) eine Funktion für ein zweites System (3) bereitstellt, wobei die Funktion für das zweite System (3) bereitgestellt wird, wenn das Steuergerät (1) sich in dem ersten oder dem zweiten Modus befindet.

5. Verfahren gemäß Anspruch 4, **dadurch gekennzeichnet, dass** das zweite System (3) ein Fahrzeugüberwachungssystem ist, welches dazu eingerichtet ist, einen Vorgang im Umfeld des Fahrzeuges (100) zu protokollieren oder dazu eingerichtet ist, lediglich bei einem Stillstand des Fahrzeuges (100) in Betrieb zu sein.

6. Verfahren gemäß einem der voranstehenden Ansprüche, **dadurch gekennzeichnet, dass** das Ausführen der zweiten Startsequenz (18), um das Steuergerät (1) in den zweiten Modus zu versetzten, in Reaktion darauf erfolgt, dass von einer Sensoreinheit (4) ein Auslösesignal bereitgestellt wird.

7. Verfahren gemäß einem der voranstehenden Ansprüche, **dadurch gekennzeichnet, dass** das Steuergerät (1) eine Steuerelektronik für einen Sensor, insbesondere für ein Kamerasystem (5, 6) ist.

8. Verfahren gemäß einem der voranstehenden Ansprüche, **dadurch gekennzeichnet, dass** der zusätzliche Selbsttest (12) nach einem Hochfahren des Steuergerätes (1), bei welchem die zweite Startsequenz ausgeführt wurde, in Reaktion auf eine Anforderung ausgeführt wird, um das Steuergerät (1) in den ersten Modus zu versetzen.

9. Verfahren gemäß einem der voranstehenden Ansprüche, **dadurch gekennzeichnet, dass** bei dem Hochfahren des Steuergerätes (1) zunächst ein Schalter in eine erste Stellung gesetzt wird und der Schalter am Ende der ersten Startsequenz (17) in eine zweite Stellung gesetzt wird, wobei der Schalter (7) dazu eingerichtet ist, ein Ausführen einer sicherheitsrelevanten Funktion zu unterbinden, wenn dieser sich in der ersten Stellung befindet.

10. Vorrichtung umfassend ein Steuergerät (1), welches mit einem ersten System (2) und einem zweiten System (3) gekoppelt ist und welches durch ein Hochfahren in einen betriebsbereiten Zustand versetzbar ist, wobei das Steuergerät (1) dazu eingerichtet ist, bei dem Hochfahren wahlweise
• eine erste Startsequenz (17) auszuführen, um das Steuergerät (1) in einen ersten Modus zu versetzen, oder
• eine zweite Startsequenz (18) auszuführen, um das Steuergerät (1) in einen zweiten Modus zu versetzen,
- wobei die erste Startsequenz (17) gegenüber der zweiten Startsequenz (18) einen zusätzlichen Selbsttest (12) umfasst,
**dadurch gekennzeichnet, dass**
- das Steuergerät (1) dazu eingerichtet ist, Informationen für ein erstes System (2) bereitzustellen, wobei die Informationen nur dann für das erste System (2) bereitgestellt werden oder von dem ersten System (2) genutzt werden, wenn das Steuergerät (1) sich in dem ersten Modus befindet, , und
- das Steuergerät (1) dazu eingerichtet ist, Informationen für das zweite System (3) bereitzustellen, wobei die Informationen für das zweite System (3) bereitgestellt werden, wenn das Steuergerät (1) sich in dem ersten oder dem zweiten Modus befindet.

## Claims

1. Method for operating a control unit (1) which is coupled to a first system (2) and to a second system (3), comprising:
- starting up the control unit (1) in order to change it to a state ready for operation, wherein, when starting up the control unit (1),
• either a first starting sequence (17) is executed in order to change the control unit (1) to a first mode, or
• a second starting sequence (18) is executed in order to change the control unit (1) to a second mode,
- wherein, in comparison with the second starting sequence (18), the first starting sequence (17) comprises an additional self-test (12), **characterized in that**
- the control unit (1) provides information for the first system (2), wherein the information is provided for the first system (2) or is used by the first system (2) only when the control unit (1) is in the first mode, and
- the control unit (1) provides information for the second system (3), wherein the information is provided for the second system (3) if the control unit (1) is in the first or second mode.

2. Method according to Claim 1, **characterized in that** the first system (2) is a system relevant to a driving mode of a vehicle (100).

3. Method according to one of the preceding claims, **characterized in that** the control unit (1) provides a function for the first system (2), wherein the function is provided for the first system (2) or is used by the first system (2) only when the control unit (1) is in the first mode.

4. Method according to one of the preceding claims, **characterized in that** the control unit (1) provides a function for a second system (3), wherein the function is provided for the second system (3) if the control unit (1) is in the first or second mode.

5. Method according to Claim 4, **characterized in that** the second system (3) is a vehicle monitoring system which is configured to log a process in the surroundings of the vehicle (100) or is configured to operate only when the vehicle (100) is at a standstill.

6. Method according to one of the preceding claims, **characterized in that** the execution of the second starting sequence (18) in order to change the control unit (1) to the second mode is effected in response to a trigger signal being provided by a sensor unit (4).

7. Method according to one of the preceding claims, **characterized in that** the control unit (1) is control electronics for a sensor, in particular for a camera system (5, 6).

8. Method according to one of the preceding claims, **characterized in that** the additional self-test (12) after starting up the control unit (1), during which the second starting sequence was executed, is carried out in response to a request to change the control unit (1) to the first mode.

9. Method according to one of the preceding claims, **characterized in that**, when starting up the control unit (1), a switch is first of all put into a first position and the switch is put into a second position at the end of the first starting sequence (17), wherein the switch (7) is configured to prevent a safety-relevant function from being performed if the switch is in the first position.

10. Apparatus comprising a control unit (1) which is coupled to a first system (2) and to a second system (3) and can be changed to a state ready for operation by being started up, wherein the control unit (1) is configured, when being started up,
• to either execute a first starting sequence (17) in order to change the control unit (1) to a first mode, or
• to execute a second starting sequence (18) in order to change the control unit (1) to a second mode,
- wherein, in comparison with the second starting sequence (18), the first starting sequence (17) comprises an additional self-test (12), **characterized in that**
- the control unit (1) is configured to provide information for a first system (2), wherein the information is provided for the first system (2) or is used by the first system (2) only when the control unit (1) is in the first mode, and
- the control unit (1) is configured to provide information for the second system (3), wherein the information is provided for the second system (3) if the control unit (1) is in the first or second mode.

## Revendications

1. Procédé de fonctionnement d'un dispositif de commande (1) qui est couplé à un premier système (2) et à un deuxième système (3), ledit procédé comprenant les étapes suivantes :
- démarrer l'unité de commande (1) pour la mettre dans un état prêt à fonctionner,
• une première séquence de démarrage (17) destinée à mettre l'unité de commande (1) dans un premier mode, ou
• une deuxième séquence de démarrage (18) destinée à mettre l'unité de commande (1) dans un deuxième mode, étant mises en œuvre de manière optionnelle lors du démarrage de l'unité de commande (1),
- la première séquence de démarrage (17) comprenant par rapport à la deuxième séquence de démarrage (18) un autotest supplémentaire (12), **caractérisé en ce que**
- l'unité de commande (1) fournit des informations au premier système (2), les informations n'étant fournies au premier système (2) ou utilisées par le premier système (2) que lorsque l'unité de commande (1) est dans le premier mode, et
- l'unité de commande (1) fournit des informations au deuxième système (3), les informations étant fournies au deuxième système (3) lorsque l'unité de commande (1) est dans le premier ou le deuxième mode.

2. Procédé selon la revendication 1, **caractérisé en ce que** le premier système (2) est un système pertinent pour un fonctionnement de conduite d'un véhicule (100).

3. Procédé selon l'une des revendications précédentes, **caractérisé en ce que** l'unité de commande (1) fournit une fonction au premier système (2), la fonction n'étant fournie au premier système (2) ou utilisée par le premier système (2) que lorsque l'unité de commande (1) est dans le premier mode.

4. Procédé selon l'une des revendications précédentes, **caractérisé en ce que** l'unité de commande (1) fournit une fonction à un deuxième système (3), la fonction étant fournie au deuxième système (3) lorsque l'unité de commande (1) est dans le premier ou le deuxième mode.

5. Procédé selon la revendication 4, **caractérisé en ce que** le deuxième système (3) est un système de surveillance de véhicule qui est conçu pour consigner un processus dans l'environnement du véhicule (100) ou est conçu pour être en fonctionnement seulement lorsque le véhicule (100) est à l'arrêt.

6. Procédé selon l'une des revendications précédentes, **caractérisé en ce que** la mise en œuvre de la deuxième séquence de démarrage (18) pour mettre l'unité de commande (1) dans le deuxième mode est effectuée en réponse à la fourniture d'un signal de déclenchement par une unité de détection (4).

7. Procédé selon l'une des revendications précédentes, **caractérisé en ce que** l'unité de commande (1) est une électronique de commande d'un capteur, notamment d'un système de caméra (5, 6).

8. Procédé selon l'une des revendications précédentes, **caractérisé en ce que** l'autotest supplémentaire (12) est effectué après le démarrage de l'unité de commande (1), au cours duquel la deuxième séquence de démarrage a été effectuée, en réponse à une requête de mettre l'unité de commande (1) dans le premier mode.

9. Procédé selon l'une des revendications précédentes, **caractérisé en ce qu'**un commutateur est d'abord mis sur une première position lors du démarrage de l'unité de commande (1), et le commutateur est mis sur une deuxième position à la fin de la première séquence de démarrage (17), le commutateur (7) étant conçu pour empêcher la réalisation d'une fonction liée à la sécurité lorsque celui-ci est dans la première position.

10. Dispositif comprenant une unité de commande (1) qui est couplée à un premier système (2) et à un deuxième système (3) et qui peut être mise dans un état prêt à fonctionner par démarrage, l'unité de commande (1) étant conçue pour mettre en oeuvre de manière optionnelle lors du démarrage
• une première séquence de démarrage (17) destinée à mettre l'unité de commande (1) dans un premier mode, ou
• une deuxième séquence de démarrage (18) destinée à mettre l'unité de commande (1) dans un deuxième mode,
- la première séquence de démarrage (17) comprenant par rapport à la deuxième séquence de démarrage (18) un autotest supplémentaire (12),
**caractérisé en ce que**
- l'unité de commande (1) fournit des informations à un premier système (2), les informations n'étant fournies au premier système (2) ou utilisées par le premier système (2) que lorsque l'unité de commande (1) est dans le premier mode, et
- l'unité de commande (1) fournit des informations au deuxième système (3), les informations étant fournies au deuxième système (3) lorsque l'unité de commande (1) est dans le premier ou le deuxième mode.
